# EUROPÄISCHE PATENTSCHRIFT

(11) **EP 1 840 397 B1**
(45) Veröffentlichungstag und Bekanntmachung des Hinweises auf die Patenterteilung: **17.11.2010**
(21) Anmeldenummer: 06025170.9
(22) Anmeldetag: 06.12.2006
(51) Int. Cl.: F16D 1/04, H01H 33/42

(54) **Schaltwelle für eine elektrische Schalteinrichtung**
Selector shaft for electrical switchgear
Arbre de commande pour un mécanisme à mise au point

(30) Priorität: 28.03.2006 DE 102006015695
(43) Veröffentlichungstag der Anmeldung: 03.10.2007
(73) Patentinhaber: AREVA Energietechnik GmbH, 60528 Frankfurt (DE)
(72) Erfinder: Stelter, Achim, 34128 Kassel (DE); Stumpf, Karsten, 34587 Felsberg-Rhünda (DE)
(74) Vertreter: Schäfer, Wolfgang

(56) Entgegenhaltungen:
- DE-A1- 2 525 518
- FR-A1- 2 452 774
- US-A- 3 367 692
- US-A- 3 438 662
- US-A- 3 606 407
- US-A- 4 416 563

## Beschreibung

Die Erfindung betrifft eine Schaltwelle für eine elektrische Schalteinrichtung, insbesondere für Hochspannungs- und/oder Mittelspannungsanlagen mit den Merkmalen des Oberbegriffs des Anspruchs 1.

Eine solche Schaltwelle ist bekannt aus US-A-3 606 407.

Solche Schaltwellen werden für elektrische Schalteinrichtungen verwendet, um elektrische Kontakte zu schließen oder zu unterbrechen. In bekannter Weise wird für ein Schalten der Schalteinrichtung die Schaltwelle mittels eines Antriebs verdreht. Einzelne Abschnitte der Schaltwelle weisen einen jeweils einem elektrischen Kontakt zugeordneten Abtrieb auf. Jeder Abtrieb wirkt mit einer Kontaktstelle zusammen, so dass bei Drehung der Schaltwelle mehrere Kontakte gleichzeitig geschaltet werden können.

Die bekannte Schaltwelle weist mehrere Abschnitte auf, so dass die vorbeschriebene Anordnung leichter montierbar ist.

Hierbei kommen Wellenstücke zum Einsatz, mit denen zueinander benachbarte Abschnitte der Schaltwelle miteinander verbunden werden können. Bei den aus dem Stand der Technik bekannten Schaltwellen wird eine Drehkraft von dem Endbereich eines Abschnitts auf eine Muffe übertragen, von dieser Muffe auf das genannte Wellenstück, von diesem Wellenstück auf eine weitere Muffe, und schließlich von der letztgenannten Muffe auf einen Endbereich eines benachbarten Abschnitts der Schaltwelle.

Eine weitere Schaltwelle ist aus der US-A-4 416 563 bekannt.

Eine derartige Schaltwelle ermöglicht die Verbindung der benachbarten Abschnitte der Schaltwelle durch ein Sicherungselement. Das Sicherungselement ist zweiteilig ausgeführt und entlang des Wellenstücks verschiebbar. Des Weiteren existiert ein Arretierstift, um zwischen dem Sicherungselement und der Welle eine feste Winkelposition zu erreichen.

Die beschriebenen Anordnungen haben den Nachteil, dass sie viel Bauraum benötigen und dabei keine optimale Kraftübertragung gewährleisten und einen nicht geringen Aufwand bei der Montage nach sich ziehen.

Hiervon ausgehend liegt der vorliegenden Erfindung die Aufgabe zugrunde, eine Schaltwelle für eine elektrische Schalteinrichtung zu schaffen, die weniger Bauraum beansprucht, die Kraftübertragung optimiert wird und die Montage der Schaltwelle vereinfacht wird.

Diese Aufgabe wird erfindungsgemäß durch eine Schaltwelle mit sämtlichen Merkmalen des Anspruchs 1 gelöst.

Durch die sich überlappenden Endbereiche kann in axialer Richtung Bauraum eingespart werden. Das Wellenstück steht an zumindest einem seiner Enden in einem überlappenden Eingriff mit dem Endbereich eines angrenzenden Abschnitts der Schaltwelle. Besonders viel Bauraum kann eingespart werden, wenn diese Art der Verbindung von Wellenstück und angrenzenden Abschnitten der Schaltwelle an beiden Enden des Wellenstücks vorgesehen ist.

Die Übertragung einer Drehkraft wird gegenüber dem Stand der Technik dahingehend optimiert, dass von einem Abschnitt der Schaltwelle Kraft direkt in das benachbarte Wellenstück übertragen werden kann, und zwar mit Hilfe der sich überlappenden Endbereiche. So kann eine Drehkraft von einem Abschnitt in ein Wellenstück und von diesem direkt in den Endbereich eines benachbarten Abschnitts der Schaltwelle eingeleitet werden. Eine Kraftkopplung von Wellenstück und Abschnitten der Schaltwelle erfolgt also direkt, d. h. ohne Zwischenschaltung von Muffen, wie dies aus dem Stand der Technik bekannt ist.

Durch die direkte Kopplung wird weiterhin der Vorteil erreicht, dass durch die Winkelstellung der Enden des Wellenstücks und die eingreifenden Enden der Abschnitte der Schaltwelle eine Möglichkeit geschaffen wird, die Winkelstellung der beiden Abschnitte der Schaltwelle zueinander zu bestimmen. Dies ermöglicht Freiheitsgrade hinsichtlich der Gestaltung des Antriebs wie auch des Abtriebs und den im Bereich des Abtriebs angeordneten Kontaktstellen.

Zur Sicherung der Kopplung ist ein Sicherungselement vorgesehen. Ein solches Sicherungselement muss nicht, wie aus dem Stand der Technik bekannt, eine Drehkraft von einem Abschnitt der Schaltwelle auf ein Wellenstück übertragen. Stattdessen wird das Sicherungselement nur zu Sicherungszwecken eingesetzt. Damit ist es möglich, die Endbereiche eines Wellenstücks mit den Endbereichen benachbarter Abschnitte der Schaltwelle zu fügen und anschließend die sich überlappenden Endbereiche mit dem Sicherungselement zu sichern.

Um die Drehlage des Sicherungselements relativ zu dem Wellenstück definieren zu können, wird vorgeschlagen, dass das Wellenstück und das Sicherungselement in Drehrichtung der Schaltwelle zueinander formschlüssig sind. Dies kann beispielsweise durch ein nicht rotationssymmetrisches Querschnittsprofil des Wellenstücks und des Sicherungselements erreicht werden.

Die einteilige Ausführung eines Sicherungselements zur Sicherung eines Wellenstücks und einer Muffe sowie die Möglichkeit, das Sicherungselement entlang des Wellenstücks zu verschieben, erleichtern die Montage des Wellenstücks. In einem Vormontagezustand wird das Sicherungselement auf dem Wellenstück fixiert, in diesem Zustand transportiert und danach bei der Montage über die Muffe geschoben und wieder fixiert. Dadurch reduziert sich der Montageaufwand, da beispielsweise kein mehrteiliges Sicherungselement zusammengeführt werden muss, um fixiert zu werden.

Die Formschlüssigkeit von Sicherungselement und Wellenstück in Drehrichtung erleichtert ebenso die Montage, da das Sicherungselement in der Vormontageposition wie auch bei der Endmontage nicht in Drehrichtung verdrehbar ist, sondern nur entlang des Wellenstücks verschoben werden kann. Eine Justierung in Drehrichtung des Wellenstücks ist durch die Formgebung von Sicherungselement und Wellenstück somit bereits gegeben. Das Sicherungselement befindet sich so immer in der korrekten Position, um, verschoben an die entsprechende Stelle des Wellenstücks, fixiert zu werden.

In Ausgestaltung der Erfindung weist einer der Endbereiche eine Aufnahme auf, in der der andere Endbereich aufgenommen ist. Dies bedeutet, dass entweder ein Endbereich eines Abschnitts der Schaltwelle eine Aufnahme aufweisen kann, in der ein Endbereich des Wellenstücks aufgenommen ist, oder dass das Wellenstück eine Aufnahme aufweisen kann, in der ein Endbereich eines Abschnitts der Schaltwelle aufgenommen ist. Selbstverständlich können diese Ausführungsformen für eine Schaltwelle auch miteinander kombiniert werden.

Nach einer Ausführungsform der Erfindung weist einer der Endbereiche zwei zueinander parallele Kraftübertragungsflächen auf, die mit zwei zugeordneten Kraftaufnahmeflächen des anderen Endbereichs zusammenwirken. Auf diese Weise können das Wellenstück und ein Abschnitt der Schaltwelle in einfacher Weise miteinander gefügt werden, indem die Kraftübertragungsflächen und die Kraftaufnahmeflächen parallel zueinander ausgerichtet werden und dann das Wellenstück und ein Abschnitt der Schaltwelle auch in einer zur Wellenachse senkrechten Richtung miteinander gefügt werden können, bis die Kraftübertragungsflächen und die Kraftaufnahmeflächen einander überdecken.

Eine besonders vorteilhafte Ausführungsform sieht vor, dass die Kraftübertragungsflächen oder die Kraftaufnahmeflächen in einer zur Wellenachse parallelen Ebene an einen Materialabschnitt grenzen, der eine Anschlagfläche für den anderen Endbereich bildet. Auf diese Weise kann die vorstehend beschriebene Montage des Wellenstücks und mindestens eines Abschnitts der Schaltwelle dahingehend erleichtert werden, da die Anschlagfläche in einer zur Wellenachse senkrechten Richtung die Relativposition von Wellenstück und mindestens eines Abschnitts der Schaltwelle definiert.

Es wird weiterhin vorgeschlagen, dass die Anschlagfläche zur Wellenachse versetzt ist. Dies ermöglicht es, eine Drehkraft weitestgehend zentral, d. h. im Bereich der Wellenachse von einem Abschnitt der Schaltwelle auf ein Wellenstück und von diesem auf einen benachbarten Abschnitt der Schaltwelle übertragen zu können.

Die Funktion des Sicherungselements kann sich im Rahmen dieser Erfindung darauf beschränken, die genannten Elemente aneinander zu sichern. Dies kann in einfacher Weise dadurch geschehen, dass das Sicherungselement ringförmig ist und somit die sich überlappenden Endbereiche des Wellenstücks bzw. eines Abschnitts der Schaltwelle umgibt.

Da das Sicherungselement im Unterschied zum Stand der Technik keine Übertragung von Drehkräften gewährleisten muss, und daher keine entsprechenden Krafteinleitungs- und Kraftausleitungsbereiche aufweisen muss, kann man es vergleichsweise kurz bauen. Vorzugsweise ist das Sicherungselement in Richtung der Wellenachse gesehen gleich lang oder kürzer als das Maß, mit dem sich die Endbereiche überlappen. Auf diese Weise kann weiterer Bauraum und auch Material eingespart werden.

Die Erfindung betrifft ferner eine elektrische Schalteinrichtung, insbesondere für Hochspannungs- und/oder Mittelspannungsanlagen, mit einer vorstehend beschriebenen Schaltwelle.

Weitere Vorteile, Merkmale und Einzelheiten der Erfindung ergeben sich aus der nachfolgenden Beschreibung, in der unter Bezugnahme auf die Zeichnung ein besonders bevorzugtes Ausführungsbeispiel im Einzelnen beschrieben ist.

In der Zeichnung zeigen:
- Figur 1: eine perspektivische Ansicht einer erfindungsgemäßen Schaltwelle;
- Figur 2: eine perspektivische Ansicht eines Wellenstücks der Schaltwelle gemäß Figur 1;
- Figur 3: eine perspektivische Ansicht eines Sicherungselements der Schaltwelle gemäß Figur 1;
- Figur 4: eine perspektivische Ansicht eines Ausschnitts der Schaltwelle gemäß Figur 1 in einem Vormontagezustand; und
- Figur 5: eine der Figur 4 entsprechende Ansicht in einem fertig montierten Zustand der Schaltwelle.

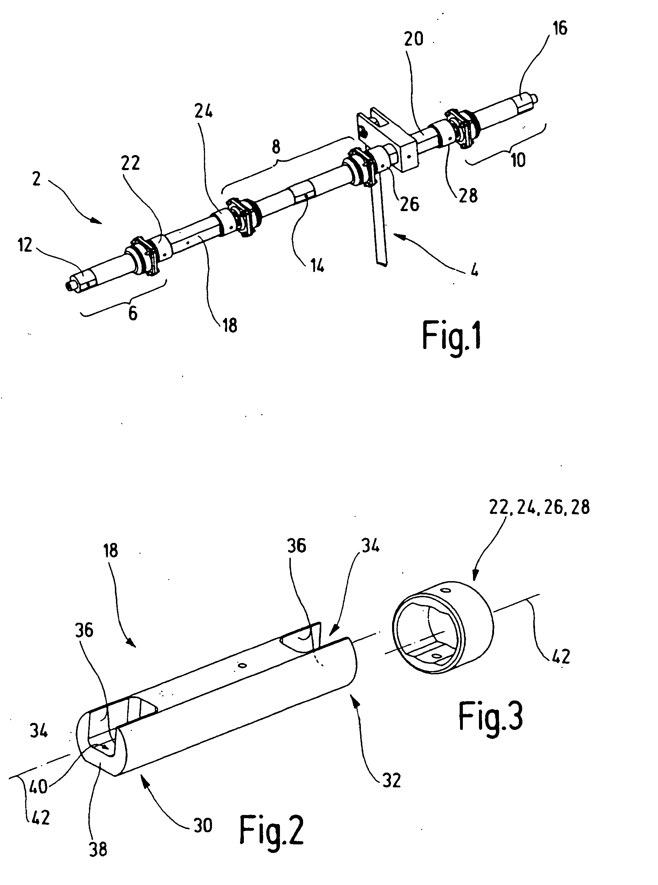

In Figur 1 ist eine erfindungsgemäße Schaltwelle insgesamt mit dem Bezugszeichen 2 bezeichnet. Diese kann mit Hilfe eines nicht näher beschriebenen und an sich vorbekannten Antriebs 4 in eine Drehbewegung versetzt werden.

Die Schaltwelle 2 weist drei Abschnitte 6, 8 und 10 auf, wobei jedem Abschnitt ein Abtrieb 12, 14 bzw. 16 zugeordnet ist. Diese Abtriebe stehen in Verbindung mit zu schaltenden Kontakten. Bei Verdrehung der Schaltwelle 2 mit Hilfe des Antriebs 4 werden also zeitgleich die Abtriebe 12, 14 und 16 betätigt, so dass nachgeordnete Schaltkontakte gleichzeitig geschaltet werden können.

Die Abschnitte 6 und 8 der Schaltwelle 2 sind über ein Wellenstück 18 miteinander verbunden. Die Abschnitte 8 und 10 der Schaltwelle 2 sind über ein Wellenstück 20 miteinander verbunden. Zur Sicherung des Wellenstücks 18 an den Abschnitten 6 und 8 sind Sicherungselemente 22 und 24 vorgesehen. Zur Sicherung des Wellenstücks 20 an den Abschnitten 8 und 10 sind Sicherungselemente 26 und 28 vorgesehen.

Figur 2 zeigt eine vergrößerte Ansicht des Wellenstücks 18. (Das Wellenstück 20 weist einen entsprechenden Aufbau auf.) Das Wellenstück 18 weist einen linker Hand dargestellten Endbereich 30 sowie einen rechter Hand dargestellten Endbereich 32 auf. In diesen Endbereichen sind jeweils Aufnahmen 34 vorgesehen, die zwei zueinander parallele Kraftübertragungsflächen 36 aufweisen. Diese Kraftübertragungsflächen grenzen an einen Materialabschnitt 38, der eine Anschlagfläche 40 für einen Endbereich des Abschnitts 6 oder 8 der Schaltwelle 2 bildet. Die Anschlagfläche 40 ist gegenüber der auch in Figur 2 dargestellten Wellenachse 42 versetzt.

Figur 3 zeigt ein ringförmiges Sicherungselement 22 bis 28, dessen Öffnung ein zu dem Profil des Wellenstücks 18 bzw. 20 komplementäres Profil aufweist, so dass die Wellenstücke 18 bzw. 20 in Drehrichtung der Schaltwelle 2 formschlüssig zu den Sicherungselementen 22 bis 28 sind.

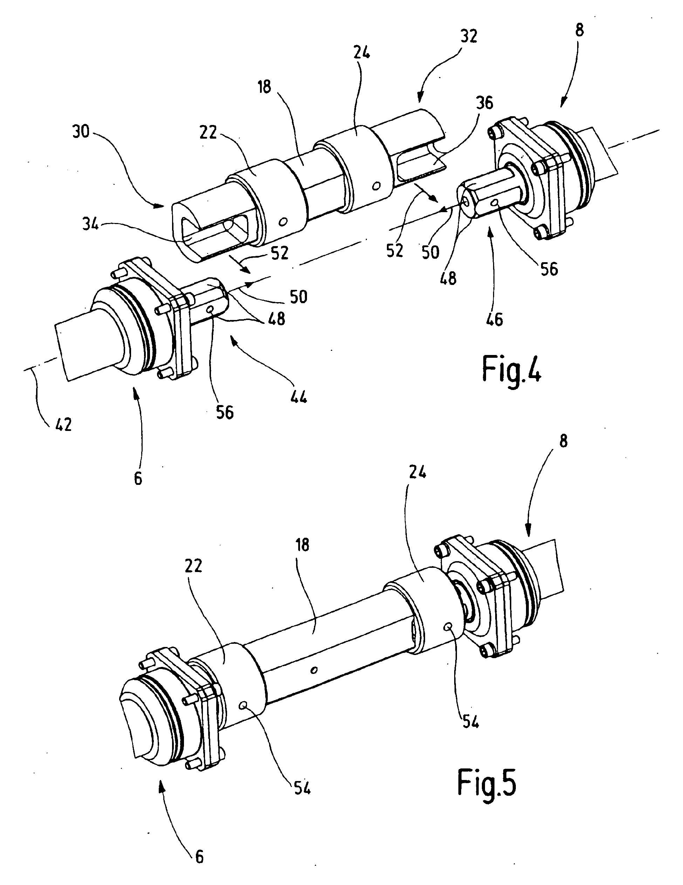

Figur 4 zeigt Ausschnitte der Abschnitte 6 und 8 der Schaltwelle 2 sowie das Wellenstück 18 mit den Sicherungselementen 22 und 24. Gemäß Figur 4 weist der Abschnitt 6 an seinem dem Wellenstück 18 zugewandten Ende einen Endbereich 44 auf. In entsprechender Weise weist der Abschnitt 8 an seinem dem Wellenstück 18 zugewandten Ende einen Endbereich 46 auf. An den Endbereichen 44 und 46 sind jeweils zwei zueinander parallele Kraftaufnahmeflächen 48 ausgebildet.

Die Montage der Abschnitte 6 und 8 und des Wellenstücks 18 kann derart erfolgen, dass die Abschnitte 6 und 8 sowie das Wellenstück 18 konzentrisch zu der Wellenachse 42 angeordnet werden und in einem folgenden Schritt die Abschnitte 6 und 8 entsprechend der mit 50 bezeichneten Fügerichtung aufeinander zu bewegt werden. Wenn jedoch die Lage der Abschnitte 6 und 8 bezüglich ihrer Position entlang der Wellenachse 42 bereits ihrer Fertigmontagestellung entspricht, kann das Wellenstück 18 mit den Abschnitten 6 und 8 gefügt werden, indem die Aufnahmen 34 in Eingriff mit den Endbereichen 44 bzw. 46 gebracht werden, indem das Wellenstück 18 in einer zur Wellenachse 42 senkrechten Fügerichtung 52 mit den Abschnitten 6 und 8 gefügt wird. Hierbei überlappen sich in Richtung der Wellenachse 42 gesehen die Endbereiche 30 und 44 sowie die Endbereiche 32 und 46. Dabei ist der Abschnitt 6 mit dem Wellenstück 8 mit Hilfe der Kraftübertragungsflächen 36.bzw. der Kraftaufnahmeflächen 48 drehfest miteinander verbunden. Entsprechendes gilt für die Verbindung zwischen dem Endbereich 32 und dem Endbereich 46.

In der in Figur 4 dargestellten Vormontagestellung sind die Sicherungselemente 22 und 24 in Richtung der Wellenachse 42 gesehen in von den Endbereichen 30 bzw. 42 entfernter Position angeordnet. Um die vorstehend beschriebene Verbindung zwischen den Endbereichen 30 und 44 einerseits sowie 32 und 46 andererseits zu sichern, können die Sicherungselemente 22 und 24 ausgehend von der in Figur 4 dargestellten Position nach außen verschoben werden. Die Sicherungselemente 22 und 24 weisen Aufnahmen 54 für nicht dargestellte Befestigungselemente, bspw. Madenschrauben oder Splinte auf, die in den Aufnahmen 54 geführt sind und mit entsprechenden Aussparungen 56, die an den Endbereiche 44 bzw. 46 ausgebildet sind, in Eingriff gebracht werden können.

Insgesamt wird eine sehr kompakte und hinsichtlich einer Übertragung von Drehkräften optimierte Konstruktion geschaffen.

## Patentansprüche

1. Schaltwelle (2) für eine elektrische Schalteinrichtung, insbesondere für Hochspannungs- und/oder Mittelspannungsanlagen, wobei die Schaltwelle mehrere Abschnitte (6, 8, 10) aufweist, wobei zueinander benachbarte Abschnitte (6, 8 bzw. 8, 10) der Schaltwelle (2) über ein Wellenstück (18 bzw. 20) miteinander verbunden sind, welches in eine Fügerichtung (52), die senkrecht zu einer Wellenachse (42) liegt, mit den Abschnitten (6,8 bzw. 8, 10) gefügt wird, wobei sich entlang der Wellenachse (42) mindestens ein Endbereich des Wellenstücks (30, 32) und ein hierzu benachbarter Endbereich (44, 46) eines Abschnitts (6, 8) der Schaltwelle (2) zumindest abschnittsweise überlappen, wobei die sich überlappenden Endbereiche (30, 44 bzw. 32, 46) in einem drehfesten Eingriff miteinander stehen wobei die sich überlappenden Endbereiche (30, 44 bzw. 32, 46) über ein Sicherungselement (22-28) aneinander gesichert sind, wobei das Sicherungselement (22-28) vormontierbar ist und in einem Vormontagezustand der Schaltwelle (2) entlang des Wellenstücks (18, 20) verschiebbar ist, **dadurch gekennzeichnet, dass** das Sicherungselement (22-28) einteilig ausgeführt ist und dass das Wellenstück (18, 20) und das Sicherungselement (22-28) in Drehrichtung der Schaltwelle (2) zueinander formschlüssig sind.

2. Schaltwelle (2) nach Anspruch 1, **dadurch gekennzeichnet, dass** einer der Endbereiche (30, 32) eine Aufnahme (34) aufweist, in der der andere Endbereich (44, 46) aufgenommen ist.

3. Schaltwelle (2) nach Anspruch 1 oder 2, **dadurch gekennzeichnet, dass** einer der Endbereiche (30, 32) zwei zueinander parallele Kraftübertragungsflächen (36) aufweist, die mit zwei zugeordneten Kraftaufnahmeflächen (48) des anderen Endbereichs (44, 46) zusammenwirken .

4. Schaltwelle (2) nach Anspruch 3, **dadurch gekennzeichnet, dass** die Kraftübertragungsflächen (36) oder die Kraftaufnahmeflächen (48) in einer zur Wellenachse (42) parallelen Ebene an einen Materialabschnitt grenzen, der eine Anschlagfläche (40) für den anderen Endbereich (44, 46) bildet.

5. Schaltwelle (2) nach Anspruch 4, **dadurch gekennzeichnet, dass** die Anschlagfläche (40) zur Wellenachse (42) versetzt ist.

6. Schaltwelle (2) nach einem der vorhergehenden Ansprüche, **dadurch gekennzeichnet, dass** das Sicherungselement (22-28) ringförmig ist.

7. Schaltwelle (2) nach einem der vorhergehenden Ansprüche, **dadurch gekennzeichnet, dass** das Sicherungselement (22-28) in Richtung der Wellenachse (42) gesehen gleich lang oder kürzer ist als das Maß, mit dem sich die Endbereiche (30, 44 bzw. 32, 46) überlappen.

8. Elektrische Schalteinrichtung, insbesondere für Hochspannungs- und/oder Mittelspannungsanlagen, mit einer Schaltwelle (2) nach mindestens einem der vorhergehenden Ansprüche.

## Claims

1. A selector shaft (2) for an electrical switchgear, in particular for high-voltage and/or medium-voltage power stations, the selector shaft having a plurality of adjacent portions (6, 8, 10), and adjacent portions (6, 8 and 8, 10) of the selector shaft (2) are connected to one another via a shaft piece (18 and 20, respectively), which piece is joined to the portions (6, 8 and 8, 10) in a joining direction (52) that is perpendicular to a shaft axis (42), and at least one end zone (30, 32) of the shaft piece and an end zone (44, 46), adjacent to it, of a portion (6, 8) of the selector shaft (2) overlap in at least some portions along the shaft axis (42), and the overlapping end zones (30, 44 and 32, 46) are in a rotationally fixed engagement with one another, and the overlapping end zones (30, 44 and 32, 46) are secured to one another via a securing element (22-28), and the securing element (22-28) can be premounted and in a premounted state of the selector shaft (2) is displaceable along the shaft piece (18, 20), **characterized in that** the securing element (22-28) is embodied in one piece; and that the shaft piece (18, 20) and the securing element (22-28) are in form-locking engagement with one another in the direction of rotation of the selector shaft (2).

2. The selector shaft (2) as defined by claim 1, **characterized in that** one of the end zones (30, 32) has a recess (34), in which the other end zone (44, 46) is received.

3. The selector shaft (2) as defined by claim 1 or 2,
**characterized in that** one of the end zones (30, 32) has two force transmission faces (36) parallel to one another, which cooperate with two associated force receiving faces (48) of the other end zone (44, 46).

4. The selector shaft (2) as defined by claim 3, **characterized in that** the force transmission faces (36) or the force receiving faces (48), in a plane parallel to the shaft axis (42), border on a material portion which forms a stop face (40) for the other end zone (44, 46).

5. The selector shaft (2) as defined by claim 4, **characterized in that** the stop face (40) is offset relative to the shaft axis (42).

6. The selector shaft (2) as defined by one of the foregoing claims, **characterized in that** the securing element (22-28) is annular.

7. The selector shaft (2) as defined by one of the foregoing claims, **characterized in that** the securing element (22-28), viewed in the direction of the shaft axis (42), is of the same length or shorter than the amount by which the end zones (30, 44 and 32, 46) overlap.

8. An electrical switchgear, in particular for high-voltage and/or medium-voltage power stations, having a selector shaft (2) as defined by at least one of the foregoing claims.

## Revendications

1. Arbre de commande (2) pour un dispositif de commutation électrique, en particulier pour des installations haute tension et/ou moyenne tension, l'arbre de commande présentant plusieurs segments (6, 8, 10), les segments adjacents (6, 8 et 8, 10) de l'arbre de commande (2) étant raccordés entre eux par le biais d'un tronçon d'arbre (18 et 20), lequel s'enclenche avec les segments (6, 8 et 10) dans une direction d'enclenchement (52) perpendiculaire à l'axe d'arbre (42), au moins une zone d'extrémité du tronçon d'arbre (30, 32) et une zone d'extrémité (44, 46) adjacente d'un segment (6, 8) de l'arbre de commande (2) se chevauchant au moins partiellement le long de l'axe d'arbre (42), les zones d'extrémité se chevauchant (30, 44 et 32, 46) étant engrenées l'une à l'autre de façon résistante à la torsion, les zones d'extrémité se chevauchant (30, 44 et 32, 46) étant bloquées l'une par rapport à l'autre par le biais d'un élément d'arrêt (22-28), l'élément d'arrêt (22-28) pouvant être monté au préalable et, dans un état de pré-montage de l'arbre de commande (2), pouvant être déplacé le long du tronçon d'arbre (18, 20), **caractérisé en que** l'élément d'arrêt (22-28) est réalisé d'un seul tenant et en ce que le tronçon d'arbre (18, 20) et l'élément d'arrêt (22-28) sont assemblés par correspondance de forme dans le sens de rotation de l'arbre de commande (2).

2. Arbre de commande (2) selon la revendication 1, **caractérisé en ce que** l'une des zones d'extrémité (30, 32) présente un logement (34), dans lequel l'autre zone d'extrémité (44, 46) vient se loger.

3. Arbre de commande (2) selon la revendication 1 ou 2, **caractérisé en ce que** l'une des zones d'extrémité (30, 32) présente deux surfaces de transmission de force (36) parallèles entre elles qui coopèrent avec deux surfaces de réception associées (48) de l'autre zone d'extrémité (44, 46).

4. Arbre de commande (2) selon la revendication 3, **caractérisé en ce que** les surfaces de transmission de force (36) ou les surfaces de réception (48) touchent un segment de matériau dans un plan parallèle à l'axe d'arbre (42), lequel segment forme une surface de butée (40) pour l'autre zone d'extrémité (44, 46).

5. Arbre de commande (2) selon la revendication 4, **caractérisé en ce que** la surface de butée (40) est déplacée jusqu'à l'axe d'arbre (42).

6. Arbre de commande (2) selon l'une des revendications précédentes, **caractérisé en ce que** l'élément d'arrêt (22-28) est de forme annulaire.

7. Arbre de commande (2) selon l'une des revendications précédentes, **caractérisé en ce que** l'élément d'arrêt (22-28), vu dans le sens de l'axe d'arbre (42), est de même longueur ou plus petit que la dimension sur laquelle les zones d'extrémité (30, 34 et 32, 46) se chevauchent.

8. Dispositif de commutation électrique, en particulier pour des installations haute et/ou moyenne tension, comprenant un arbre de commande (2) selon au moins l'une des revendications précédentes.
